(19) **Europäisches Patentamt European Patent Office Office européen des brevets**

(11) **EP 4 516 515 A1**

(12) **EUROPEAN PATENT APPLICATION**

(43) Date of publication:
05.03.2025 Bulletin 2025/10

(21) Application number: 24194895.9

(22) Date of filing: 16.08.2024

(51) International Patent Classification (IPC):
*B41J 2/21* (2006.01)     *B41J 25/304* (2006.01)
*G06F 3/12* (2006.01)

(52) Cooperative Patent Classification (CPC):
**B41J 2/2117; B41J 25/304; G06F 3/1296;**
B41J 2202/21

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 JP 2023141560**

(71) Applicant: **CANON KABUSHIKI KAISHA Tokyo 146-8501 (JP)**

(72) Inventor: **RYO, Cho Tokyo, 146-8501 (JP)**

(74) Representative: **TBK Bavariaring 4-6 80336 München (DE)**

(54) **PRINTING APPARATUS, CONTROL METHOD, NON-TRANSITORY COMPUTER-READABLE STORAGE MEDIUM, AND COMPUTER PROGRAM**

(57)     A printing apparatus includes moving means for individually moving each of printheads between a printing position and a retracted position apart from a print medium as compared to the printing position, and control means for controlling the moving means so as to, before execution of a top print job among a plurality of print jobs, move a printhead to be used in the top print job and a printhead to be used in a print job after the top print job from the retracted position to the printing position. The control means controls the moving means so as to, during execution of a first print job among the plurality of print jobs, move a printhead to be used in a second print job after the first print job from the retracted position to the printing position.

**F I G. 6**

**Description**

BACKGROUND OF THE INVENTION

Field of the Invention

The present invention relates to a printing apparatus.

Description of the Related Art

There is known a printing apparatus that prints an image by discharging ink from a printhead. In a printing apparatus including a plurality of printheads, there may be a printhead that need not discharge ink depending on an image to be printed or print settings. Japanese Patent Laid-Open No. 2011-201132 discloses a technique of moving color heads that need not discharge ink to a retracted position when monochrome printing is selected.

In the technique of Japanese Patent Laid-Open No. 2011-201132, each printhead is moved before execution of a print job. If execution of a plurality of print jobs is requested, a printing operation is stopped between the print jobs, and the printheads are moved. As a result, productivity of a printed product lowers.

SUMMARY OF THE INVENTION

The present invention provide a technique of improving productivity of a printed product.

The present invention in a first aspect provides a printing apparatus as specified in claims 1 to 12.

The present invention in a second aspect provides a control method as specified in claim 13.

The present invention in a third aspect provides a non-transitory computer-readable storage medium as specified in claim 14.

The present invention in a fourth aspect provides a computer program as specified in claim 15.

Further features of the present invention will become apparent from the following description of exemplary embodiments (with reference to the attached drawings).

BRIEF DESCRIPTION OF THE DRAWINGS

Fig. 1 is a schematic view of a printing apparatus according to an embodiment of the present invention;
Figs. 2A and 2B are explanatory views of a moving unit;
Fig. 3 is a block diagram of the control system of the printing apparatus shown in Fig. 1;
Fig. 4 is a view showing an example of display of an operation unit;
Fig. 5 is a flowchart showing an example of processing of a control unit 402;
Fig. 6 is a flowchart showing an example of processing of the control unit 402;
Fig. 7 is a flowchart showing an example of processing of the control unit 402;
Figs. 8A to 8C are views showing an example of the positions of printheads 2;
Fig. 9 is a view showing another example of display of the operation unit;
Fig. 10 is a view showing another example of display of the operation unit;
Fig. 11 is a view showing another example of display of the operation unit;
Fig. 12 is a flowchart showing another example of processing of the control unit 402;
Fig. 13 is a flowchart showing another example of processing of the control unit 402;
Fig. 14 is a flowchart showing another example of processing of the control unit 402;
Fig. 15 is a view showing an example in which a waiting period changes depending on the order of execution of a plurality of print jobs;
Fig. 16 is a view showing an example in which a waiting period changes depending on the order of execution of a plurality of print jobs; and
Fig. 17 is a schematic view of another example of the printing apparatus.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

<First Embodiment>

<Configuration of Printing Apparatus>

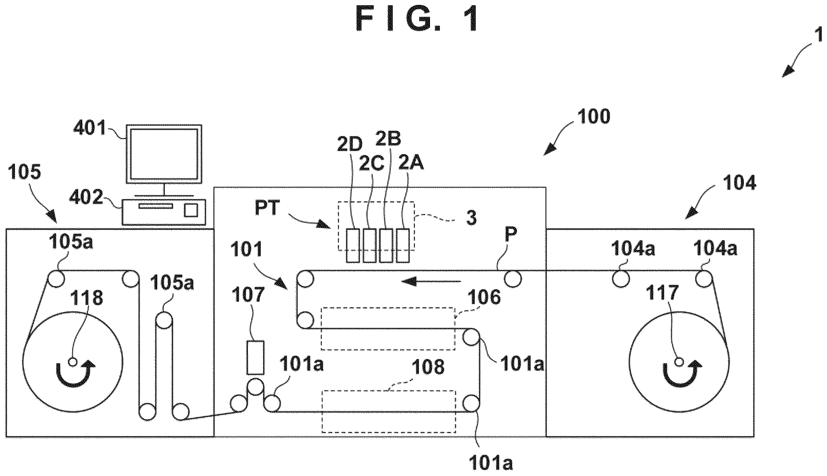

Fig. 1 is a schematic view of a printing apparatus 1 according to an embodiment of the present invention. The printing apparatus 1 is an apparatus that discharges liquid ink to a print medium P to print an image. Note that "printing" includes not only forming significant information such as characters and graphics but also forming images, figures, patterns, and the like on print media in a broad sense, or processing print media, regardless of whether the information formed is significant or insignificant or whether the information formed is visualized so that a human can visually perceive it. In addition, although in this embodiment, sheet-like paper is assumed as a "print medium", cloth, a plastic film, and the like may also be used.

The printing apparatus 1 includes a feeding device 104, an image forming device 100, and a discharge device 105. In this embodiment, a continuous sheet (roll sheet) is used as the print medium P. The print medium P is sent from the feeding device 104 to the discharge device 105 via the image forming device 100. Note that the present invention is also applicable to a printing apparatus that prints an image on a cut sheet.

The feeding device 104 is a device that supplies the print medium P that is a roll sheet to the image forming device 100. The feeding device 104 pulls out the print medium P by rotating the rolled print medium P about a rotating shaft 117 and feeds the print medium P to the image forming device 100 at a predetermined speed via a plurality of conveyance rollers 104a. The print medium P is conveyed from the feeding device 104 to the image forming device 100 and the discharge device 105 in this order.

The discharge device 105 is a device that discharges, from the image forming device 100, the print medium P that is a product with a printed image. The discharge device 105 conveys the print medium P, which is conveyed from the image forming device 100, at a predetermined speed via a plurality of conveyance rollers 105a. The print medium P that is a product is wound in a roll by a rotating shaft 118 that rotates.

The image forming device 100 includes a conveying device 101. The conveying device 101 includes a plurality of conveyance rollers 101a, and conveys the print medium P, which is fed from the feeding device 104, at a predetermined speed. The image forming device 100 also includes a printing unit PT, a drying unit 106, a cooling unit 108, and an inspection unit 107, which are arranged sequentially from the upstream side in the conveyance direction of the print medium P.

The printing unit PT includes a printhead 2A, a printhead 2B, a printhead 2C, and a printhead 2D, which are arranged sequentially from the upstream side in the conveyance direction of the print medium P. One printhead 2 discharges one type of ink. In this embodiment, the printheads 2A to 2D discharge different types of inks. The printhead 2A discharges A ink, the printhead 2B discharges B ink, the printhead 2C discharges C ink, and the printhead 2D discharges D ink. For example, one of the A to D inks is black ink, another one is yellow ink, still another one is magenta ink, and the remaining one is cyan ink. Note that when generally referring to the printheads 2A to 2D, or indicating an arbitrary printhead, it is sometimes called a printhead 2.

The printing unit PT includes a moving unit 3. The moving unit 3 is a mechanism that individually moves the printhead 2A, the printhead 2B, the printhead 2C, and the printhead 2D between a printing position and a retracted position.

The drying unit 106 heats the print medium P, thereby promoting drying of ink discharged to the print medium P. The cooling unit 108 cools the print medium P heated by the drying unit 106. The inspection unit 107 is a device that reads and inspects the image printed on the print medium P and includes, for example, a scanner device. Examples of inspection contents are inspection of color misalignment of the printed image, inspection of discharge failures of the printhead 2, and inspection of the tint of the printed image. These inspections may be performed by printing a test pattern on the print medium P by the printhead 2 and reading the test pattern by the inspection unit 107.

The printing apparatus 1 also includes an operation unit 401 and a control unit 402. The operation unit 401 accepts a user instruction. The control unit 402 is an electronic circuit (for example, a personal computer) that controls the printing apparatus 1.

<Printhead and Moving Unit>

The printhead 2 and the moving unit 3 will be described. The printhead 2 according to this embodiment is a full-line head and can discharge ink supplied from an ink tank (not shown) to the whole region of the print medium P in the widthwise direction.

In the apparatus including the plurality of printheads 2, depending on the image to be printed, the printheads 2 that discharge ink and the printheads 2 that do not may occur during the printing operation. Vapor of water of the ink floats on the print medium P. If the vapor sticks to the printhead 2 that does not discharge ink, the printing performance thereof may lower. To prevent this, in this embodiment, the printheads 2 can be moved between the printing position and the retracted position by the moving unit 3.

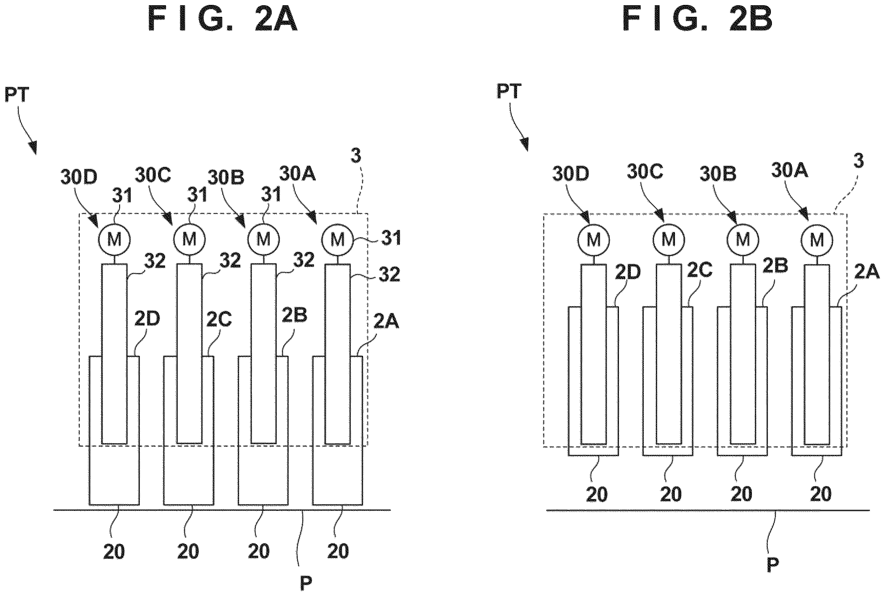

Figs. 2A and 2B exemplarily show the configuration of the printing unit PT. Fig. 2A shows a case where the printheads 2 are located at the printing position, and Fig. 2B shows a case where the printheads 2 are located at the retracted position. Each printhead 2 has a discharge surface 20 on its lower surface. The discharge surface 20 is provided with a plurality of nozzles configured to discharge ink. At the printing position, the discharge surface 20 faces close to the print medium P. At the retracted position, each printhead 2 is located apart from the print medium P as compared to the printing position. More specifically, a large gap exists between the discharge surface 20 and the print medium P. The retracted position is a position at which the vapor floating on the print medium P is difficult to stick to the discharge surface 20. Note that for the purpose of suppressing drying of the discharge surface 20, the discharge surface 20 may be capped by a cap member at the retracted position.

The moving unit 3 includes moving mechanisms 30A, 30B, 30C, and 30D for the printheads 2. The moving mechanism 30A moves the printhead 2A. The moving mechanism 30B moves the printhead 2B. The moving mechanism 30C moves the printhead 2C. The moving mechanism 30D moves the printhead 2D. The moving mechanisms 30A, 30B, 30C, and 30D each include a driving source 31 such as a motor, and an actuating mechanism 32 that moves the printhead 2 by the driving force of the driving source 31. The actuating mechanism 32 is, for example, a ball screw mechanism, a belt transmission mechanism, a link mechanism, or the like. In this embodiment, the actuating mechanism 32 raises/lowers the printhead 2 between the printing position on the lower side and the retracted position on the upper side.

The moving unit 3 is controlled to locate each printhead 2 that discharges ink to be used for printing at the printing position and each printhead 2 that discharges ink not to be used for printing at the retracted position, thereby performing a printing operation. When vapor is prevented from sticking to the printhead 2 that discharges ink not to be used for printing, the printing performance can be prevented from lowering.

<Control Unit>

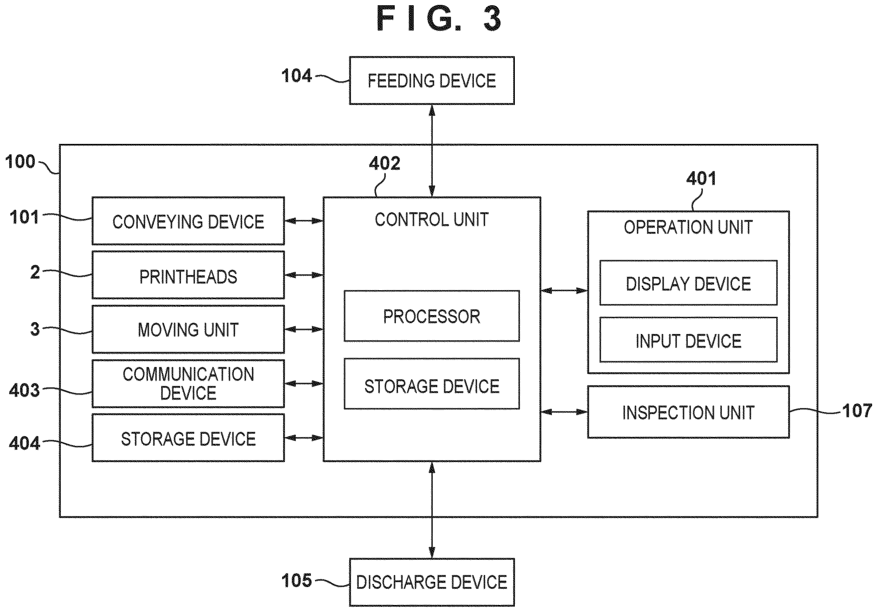

Fig. 3 is a block diagram of the control system of the printing apparatus 1. The control unit 402 includes a processor represented by a CPU, and a storage device. The storage device includes, for example, a plurality of semiconductor memories such as a RAM and a ROM. The processor executes a program deployed in the storage device, thereby controlling the printing apparatus 1. For example, the control unit 402 controls the conveying device 101, the printheads 2, the moving units 3, the inspection unit 107, the operation unit 401, the feeding device 104, and the discharge device 105.

A communication device 403 is formed by, for example, a communication control device such as a local area network (LAN) card. The communication device 403 receives a print job from, for example, an external device (for example, a user terminal), and the control unit 402 executes printing of the received print job.

A storage device 404 is an external storage device of the control unit 402, and is formed by, for example, a nonvolatile semiconductor memory (so-called flash memory), a hard disk drive (HDD), or the like. The storage device 404 can store various kinds of programs to be executed by the control unit 402 and various kinds of data necessary for execution of these programs.

The operation unit 401 is, for example, a touch panel, and includes a display device such as a liquid crystal display, and an input device that recognizes a touch operation. The display device displays various kinds of information on a display screen in accordance with a display control signal transmitted from the control unit 402. The input device accepts various kinds of input operations by the user via various kinds of operation keys such as buttons displayed on the display device, and transmits an operation signal to the control unit 402. The operation unit 401 is used, for example, by the user to set job information when executing a print job.

<Procedure of Processing of Printing Apparatus>

The procedure of processing of the printing apparatus 1 will be described. The print medium P is sent from the feeding device 104 to the discharge device 105 via the image forming device 100 in advance. The user creates print data on, for example, the external device and sets printing conditions, thereby creating a print job. The print job is then transmitted to the control unit 402 via a communication network.

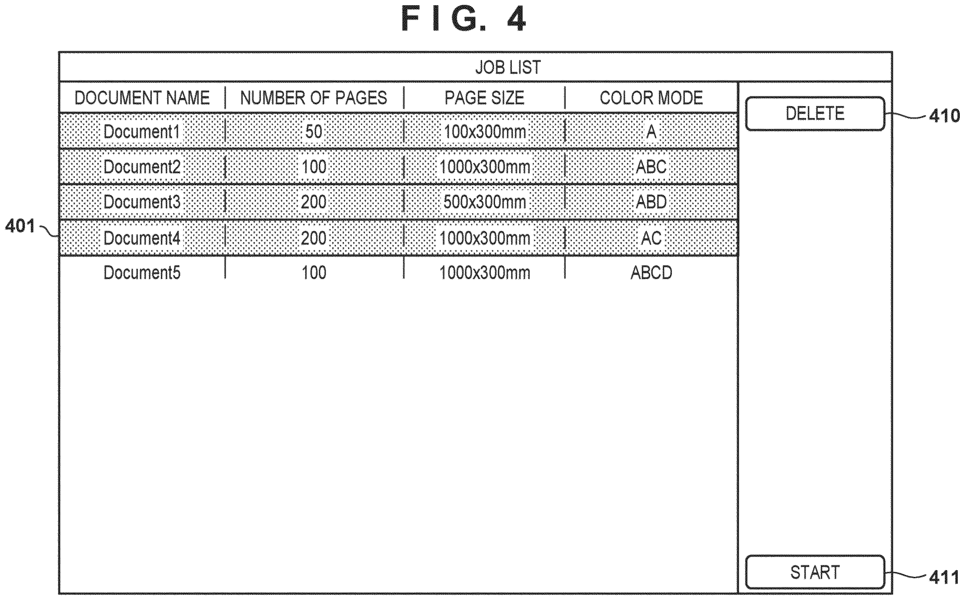

Fig. 4 is a view showing an example of a list of print jobs displayed on the operation unit 401, and this is a list of unexecuted print jobs transmitted from the external device to the printing apparatus 1. The job list includes job information such as a document name for discriminating a print job, the number of pages to be printed, the size of one page, and a color mode. The size of one page is represented by vertical size × horizontal size. The vertical size is the length of the print medium P in the conveyance direction, and the horizontal size is the length of the print medium P in the widthwise direction.

The color mode indicates the types of inks to be used for printing. A is A ink, B is B ink, C is C ink, and D is D ink.

For example, the color mode of Document! is A. This means that the A ink is used to print Document1, and the B to D inks are not used. When executing Document1, the printhead 2Athat discharges the A ink needs to be located at the printing position. Also, the color mode of Document2 is ABC. This means that the A ink, the B ink, and the C ink are used to print Document2, and the D ink is not used. When executing Document2, the corresponding printheads 2A, 2B, and 2C need to be located at the printing position. Also, the color mode of Document3 is ABD. This means that the A ink, the B ink, and the D ink are used to print Document3, and the C ink is not used. When executing Document3, the corresponding printheads 2A, 2B, and 2D need to be located at the printing position.

When the user selects a print job on the list, display of the selected print job is changed. The example of Fig. 4 exemplarily shows a mode in which four print jobs including Document1 to Document4 are selected. When the user operates a delete button 410, the selected print jobs are deleted from the list.

When the user operates a start button 411, execution of the selected print job is started. If a plurality of print jobs are selected, the printing operation is continuously executed sequentially from the print job displayed in the uppermost portion of the list. During execution of the plurality of print jobs, the print medium P is continuously conveyed at a predetermined speed. Ink is discharged from the printheads 2 to the print medium P, and an image is printed.

<Movement Control of Printheads>

Movement control of the printheads 2 by the moving unit 3 will be described. The initial position of the printhead 2 is the retracted position. As the basis of movement control of the printheads 2, each printhead 2 corresponding to the color mode of the print job to be executed is moved to the printing position, and each printhead 2 not corresponding (not used) to the color mode is moved to the retracted position. For example, when executing the print job of Document1 in Fig. 4, since the color mode is A, the printhead 2Ais moved to the printing position, and after that, the printing operation is executed. The printheads 2B to 2D are maintained at the retracted position. Also, for example, when executing the print job of Document4 in Fig. 4, since the color mode is AC, the printheads 2A and 2C are moved to the printing position, and after that, the printing operation is executed. The printheads 2B and 2D are maintained at the retracted position.

In a case where execution of a plurality of print jobs is selected, if the printing operation is stopped between the print jobs, and the printheads 2 are moved, productivity lowers. For this reason, in this embodiment, the printheads 2 are moved in parallel to the printing operation, thereby improving the productivity of a printed product. Since a predetermined time is needed to move the printheads 2, the moving timing of the printheads 2 is controlled in consideration of the moving time.

In movement control according to this embodiment to be described below, for example, whether to control movement of the printheads 2 is decided based on the relationship between the print time of a print job and the moving time of the printhead 2 to be moved from the retracted position to the printing position. If the print time of a first print job among a plurality of print jobs satisfies a condition capable of moving the printhead 2 to be added in the second print job, movement of the additional printhead 2 to be used for the second print job may be started before, particularly, ink discharge is completed in the first print job.

However, if the print time of the first print job does not satisfy the above-described control condition, for example, after each printhead 2 used in the first print job and the second print job is moved, ink discharge of the first print job is started. Thus, discharge of the second print job is started after ink discharge of the first print job is completed. Since the printheads 2 to be used for the second print job are already moved, ink is not discharged after the start of printing, time for performing only conveyance of the print medium P can be shortened, and the first print job and the second print job can continuously be printed.

<Control at Start>

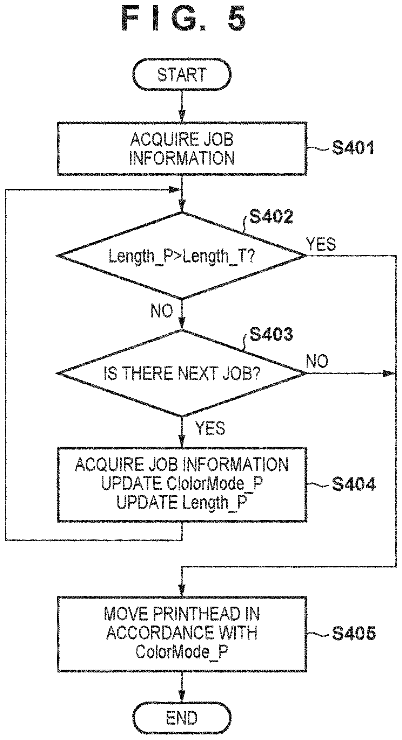

Fig. 5 shows an example of processing executed by the control unit 402, and particularly shows an example of movement control of the printheads 2 at the start of execution of a print job. At the stage before the start of execution of the print job, each printhead 2 is located at the initial position (retracted position). When the user instructs to start execution of the print job, the printheads 2 corresponding to the color mode of the print job to be executed are moved to the printing position, and the printing operation is started after the movement.

If execution of a plurality of print jobs is selected, as exemplified in Fig. 4, depending on the contents of the print jobs, control can be executed such that the printheads 2 to be used in a first print job and the printheads 2 to be used in a subsequent print job are moved from the retracted position to the printing position in advance.

For example, in the example shown in Fig. 4, if the time of the printing operation of Document1 executed first is short, it may be impossible to make it in time to move the printheads 2B and 2C necessary for printing of Document2 to the printing position during the printing operation of Document1. In this case, not only the printhead 2A necessary for printing of Document1 but also the printheads 2B and 2C necessary for printing of Document2 are moved to the printing position before execution of Document1. This makes it possible to continuously execute the print jobs of Document1 and Document2.

The contents of Fig. 5 will be described. In step S401, job information of a print job whose execution is instructed is acquired. If execution of the print jobs of Document1 to Document4 is instructed, like the example of Fig. 4, the job information of Document1 that is the first (top) print job is acquired.

The color mode of the acquired print job is stored as ColorMode_J. Also, the contents of ColorMode_J are stored as ColorMode_P and ColorMode_N. That is, ColorMode_P = ColorMode_N = ColorMode_J. In the example shown in Fig. 4, since the color mode of Document1 is A, ColorMode_J = A, and ColorMode_P = ColorMode_N = A.

Also, in step S401, from the number of pages and the page size in the acquired job information, the total printing length (Length_J) of the print job is obtained based on the following equation and stored as Length_P.

$$\text{Length\_J} = \text{number of pages} \times \text{conveyance direction length}$$

For example, in the example shown in Fig. 4, since the number of pages of Document1 is 50, and the conveyance direction length of one page is 100 [mm], Length P = Length_J = 50 × 100 [mm] = 5000 [mm].

In step S402, the calculated Length_P is compared with Length _T. Length_T is the conveyance amount of the print medium P until the printheads 2 are moved from the retracted position to the printing position (or from the printing position to the retracted position).

$$\text{Length\_T} = \text{moving time} \times \text{conveyance speed of print medium}$$

In this embodiment, as an example, the moving time is 5 sec, and the conveyance speed is 60 mpm (meter/min). Hence,

$$\text{Length\_T} = 5\,[\text{s}] \times 60\,[\text{mpm}] = 5000\,[\text{mm}]$$

If Length P > Length_T, the process advances to step S405. If Length_P ≤ Length _T, the process advances to step S403. In Document1 shown in Fig. 4, since Length P = 5000 [mm] (= Length_T), the process advances to step S403.

In step S403, it is determined whether a next print job scheduled to be executed exists. If the next print job exists, the process advances to step S404. If the next print job does not exist, the process advances to step S405. In the example shown in Fig. 4, since Document2 exists next to Document1, the process advances to step S404.

In step S404, the job information of the next print job is acquired, the color mode of the print job is obtained as ColorMode_J, and the total printing length is obtained as Length_J. In addition, ColorMode _P, ColorMode_N, and Length_P are updated to

$$\text{ColorMode\_P} = \text{ColorMode\_N} = \text{ColorMode\_P} + \text{ColorMode\_J}$$

$$\text{Length\_P} = \text{Length\_P} + \text{Length\_J}$$

After that, the process returns to step S402.

In the example shown in Fig. 4, concerning Document2 next to Document 1,

$$\text{ColorMode\_J} = \text{ABC}$$

$$\text{Length\_J} = 100 \times 1000\,[\text{mm}] = 100000\,[\text{mm}]$$

ColorMode_P, ColorMode_N, and Length_P are updated to

$$\text{ColorMode\_P} = \text{ColorMode\_N} = \text{A} + \text{ABC} = \text{ABC}$$

$$\text{Length\_P} = 5000\,[\text{mm}] + 100000\,[\text{mm}] = 105000\,[\text{mm}]$$

After that, when the process returns to step S402, since Length_P = 105000 [mm] (> Length_T), the process advances to step S405.

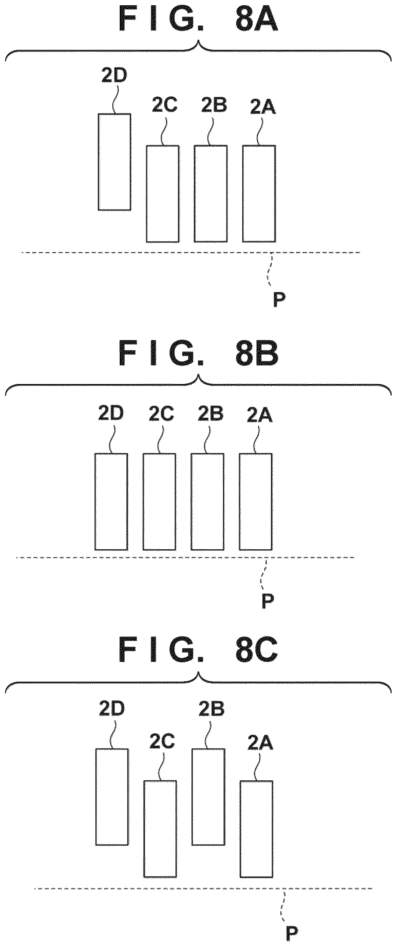

In step S405, the printheads 2 are moved in accordance with ColorMode_P. In the example shown in Fig. 4, since ColorMode_P = ABC, the corresponding printheads 2A to 2C are moved to the printing position. Fig. 8A exemplarily shows the positions of the printheads 2 after the movement. Not only the printhead 2A necessary in the print job of Document1 but also the printheads 2B and 2C necessary in the print job of Document2 are moved to the printing position in advance. The printhead 2D remains at the retracted position.

<Control after Start>

Movement control of the printheads 2 after the start of execution of the print job will be described. In this embodiment, control can be executed such that, using execution of a print job, the printheads 2 to be used for a print job after the print job are moved from the retracted position to the printing position. In this case as well, considering the moving time of the printheads 2, the printheads 2 are moved until the start of the print job that uses the printheads 2.

Also, in this embodiment, movement of the printheads 2 not to be used in a print job from the printing position to the retracted position is started before the end of a print job before the print job. At this time, the printheads 2 may be used again in a subsequent print job. Hence, in some cases, the printheads 2 are maintained at the printing position without being moved to the retracted position. This is called standby of the printheads 2.

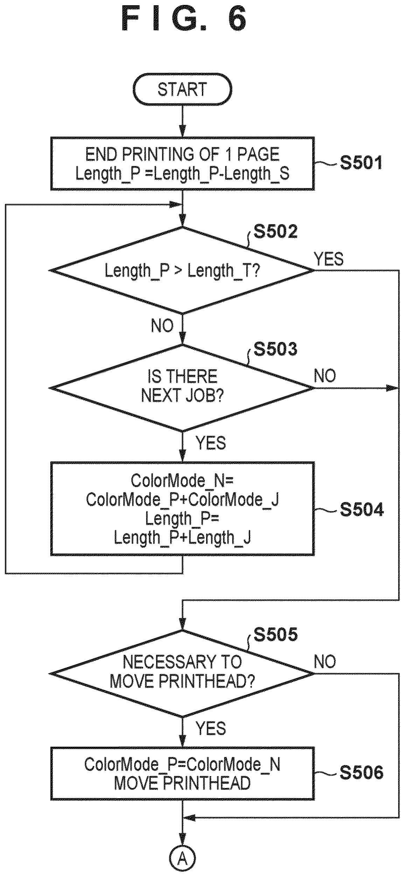

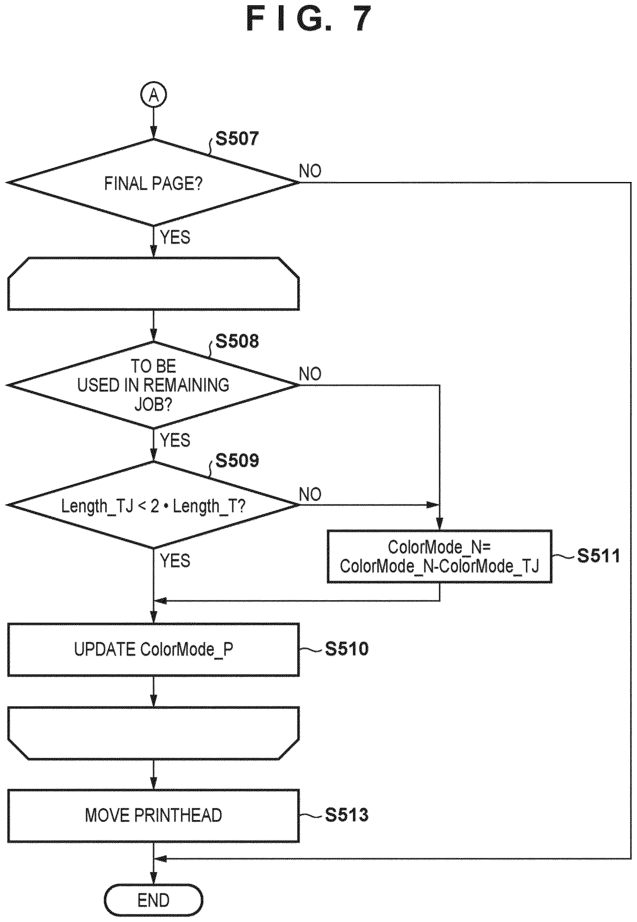

Figs. 6 and 7 show an example of processing executed by the control unit 402, and particularly shows an example of movement control of the printheads 2 during execution of a print job. The processing shown in Figs. 6 and 7 is executed every time printing of an image of one page is completed.

In step S501, a conveyance direction length Length_S of a page whose printing is completed is acquired from job information, and Length_P is updated

$$Length\_P = Length\_P - Length\_S$$

For example, in the example shown in Fig. 4, if printing of the first page of Document1 is completed,

$$Length\_P = 105000 \, [mm] - 100 \, [mm] = 104900 \, [mm]$$

In step S502, Length_P calculated in step S501 is compared with Length_T. If Length P > Length_T, the process advances to step S505. If Length_P $\leq$ Length _T, the process advances to step S503. In the example shown in Fig. 4, if printing of the first page of Document1 is completed, since Length_P is 104,900 [mm], and Length_T is 5,000 [mm], Length P > Length_T, and the process advances to step S505.

In step S505, necessity of movement of the printheads 2 is determined by comparing ColorMode_P and ColorMode_N. If these do not match, it is judged that movement of the printheads 2 is necessary, and the process advances to step S506. If these match, it is judged that movement of the printheads 2 is unnecessary, and the process advances to step S507 (Fig. 7). In the example shown in Fig. 4, at the stage when printing of the first page of Document1 is completed, both ColorMode_P and ColorMode_N are ABC, and therefore, the process advances to step S507.

In step S506, ColorMode_P is updated by ColorMode_N, and the printheads 2 corresponding to the type of ink determined as mismatch in step S505 are moved.

In step S503, it is determined whether a print job next to the print job currently under execution exists. If it is determined that the next print job exists, the process advances to step S504. If the next print job does not exist, the process advances to step S505. If the print job currently under execution is Document1 in the example shown in Fig. 4, execution of Document2 is scheduled next, and it is therefore determined that the next print job exists.

In step S504, ColorMode_N and Length_P are updated to

$$ColorMode\_N = ColorMode\_P + ColorMode\_J$$

$$Length\_P = Length\_P + Length\_J$$

In step S507 of Fig. 7, it is determined whether the page whose printing is completed is the final page of the print job under execution. If it is determined in step S507 that the page is the final page, the process advances to step S508. If it is determined in step S507 that the page is not the final page, the processing is ended, and completion of printing of the next page is awaited.

In steps S508 to S510, the following processing is performed for the printheads 2 used in the current print job. In step S508, it is determined whether the printhead 2 currently at the printing position is to be used in any one of print jobs (to be referred to as subsequent jobs) after that. If it is determined that the printhead 2 is to be used, the process advances to step S509. If it is determined that the printhead 2 is not to be used, the process advances to step S511.

In step S509, Length_TJ is calculated, and it is determined whether Length_TJ < 2·Length_T. Length_TJ is the distance from the final page to the subsequent job (the conveyance amount of the print medium P). 2·Length_T is a value twice larger than Length_T and indicates a time necessary for the printhead 2 to reciprocally move from printing position -> retracted position -> printing position. If Length_TJ < 2-Length_T, the process advances to step S510. If Length_TJ ≥ 2-Length_T, the process advances to step S511.

In step S510, ColorMode_P is updated by ColorMode_N. In step S511, ColorMode_N is updated by

$$ColorMode\_N = ColorMode\_N - ColorMode\_TJ$$

ColorMode_TJ is a color mode (inks A to D) indicating the printheads 2 that are currently at the printing position and are to be used in the subsequent job.

In step S513, the printheads 2 are moved in correspondence with ColorMode_P. The processing is thus ended.

Detailed examples according to the example shown in Fig. 4 will be described below.

(Example 1: When Printing of Final Page of Document1 Is Completed)

In step S501, Length_P is 100,000 [mm]. In step S502, Length_P is 100,000 [mm] and is determined to be larger than Length_T (5,000 [mm]). The process advances to step S505.

In step S505, it is determined that both ColorMode_P and ColorMode_N are ABC, and the process advances to step S507. In step S507, it is determined that the page is the final page, and the process advances to step S508.

In step S508, if it is determined that the printheads 2 corresponding to ColorMode_J are to be used in a remaining job, the process advances to step S509. It is determined that the printhead 2A used in printing of Document1 is to be used in printing of Document2 as well, the process advances to step S509. In step S509, Length_TJ is calculated and compared with a value twice larger than Length_T. If it is determined that Length_TJ is smaller than the value twice larger than Length_T, the process advances to step S510. The distance Length_TJ from Document1 to Document2 is 0 [mm]. It is determined that Length_TJ is smaller than the value 10,000 [mm] twice larger than Length_T, and the process advances to step S510.

In step S510, ColorMode_P is

$$ColorMode\_P = ColorMode\_N = ABC$$

As described above, during execution of a plurality of print jobs, if it is impossible to make it in time to move the printheads 2 scheduled to be used (printing position -> standby position -> printing position) because of the relationship between the color mode and the printing length (conveyance amount) of the subsequent print job, control to make the printheads 2 stand by at the printing position is possible.

(Example 2: When Printing of 95th Page of Document2 Is Completed)

Here, an example in which the printheads 2 are moved from the retracted position to the printing position will be described.

In step S501, Length_P is 5,000 [mm]. In step S502, Length_P is 5,000 [mm] and is determined to be equal to Length_T (5,000 [mm]), and the process advances to step S503. In step S503, the presence/absence of the next print job is determined. The print job of Document3 is scheduled next to Document2. Hence, the process advances to step S504.

In step S504, job information of Document3 is acquired. From the job information,

$$ColorMode\_J = ABD$$

$$Length\_J = 200 \times 500 \, [mm] = 100000 \, [mm]$$

ColorMode_N and Length_P are updated to

$$ColorMode\_N = ABC + ABCD = ABCD$$

$$\text{Length\_P} = 105000 \text{ [mm]}$$

The process returns to step S502, and Length P that is 105,000 [mm] is determined to be larger than Length_T (5,000 [mm]). The process advances to step S505. In step S505, ColorMode_P and ColorMode_N are compared. Since ColorMode_P is ABC, and ColorMode_N is ABCD, it is determined that these do not match, and the process advances to step S506. In step S506, ColorMode_P is updated to

$$\text{ColorMode\_P} = \text{ColorMode\_N} = \text{ABCD}$$

According to updated ColorMode_P, the additional printhead 2D is moved from the retracted position to the printing position. Fig. 8B exemplarily shows the positions of the printheads 2 after the movement. In step S507, it is determined that the page whose printing is completed is not the final page, and the processing is ended.

As described above, during execution of the print job of Document2, control to move the printheads 2 to be used in the print job of Document3 to the printing position is possible.

(Example 3: When Printing of Final Page of Document2 Is Completed)

Here, an example in which the printheads 2 are moved from the printing position to the retracted position will be described.

In step S501, Length_P is 100,000 [mm]. In step S502, Length_P is 100,000 [mm] and is determined to be larger than Length_T (5,000 [mm]), and the process advances to step S505.

In step S505, it is determined that both ColorMode_P and ColorMode_N are ABCD and match, and the process advances to step S507. In step S507, it is determined that the page is the final page, and the process advances to step S508.

In step S508, it is determined that the printheads 2A and 2B used in the print job of Document2 are to be used in the print job of subsequent Document3 as well, and the process advances to step S509. In step S509, the distance from the final page of Document2 to the first page of Document3 is calculated, and the value is Length_TJ = 0 [mm]. It is determined that Length_TJ is smaller than the value twice larger than Length_T, and the process advances to step S510.

Also, in step S508, it is determined that the printhead 2C used in Document2 is to be used in the subsequent job Document4, and the process advances to step S509. In step S509, the distance from the final page of Document2 to the first page of Document4 is calculated as Length_TJ = 150000 [mm]. It is determined that Length_TJ is larger than the value twice larger than Length_T, and the process advances to step S511.

In step S511, ColorMode_N is updated to

$$\text{ColorMode\_N} = \text{ColorMode\_N} - \text{ColorMode\_TJ} = \text{ABCD} - \text{C} = \text{ABD}$$

In step S510, ColorMode_P is updated to ColorMode_P = ColorMode_N. In step S513, according to ColorMode_P = ABD, the printhead 2C is moved from the printing position to the retracted position.

As described above, during execution of a plurality of print jobs, if it is possible to make it in time to move the printheads 2 scheduled to be used (printing position -> standby position -> printing position) because of the relationship between the color mode and the printing length (conveyance amount) of the subsequent print job, control to move the printheads 2 to the retracted position is possible.

(Example 4: When Printing of 190th Page of Document3 Is Completed)

Here, an example in which the printheads 2 are moved from the retracted position to the printing position will be described.

In step S501, Length_P is 5,000 [mm]. In step S502, Length_P is 5,000 [mm] and is determined to be equal to Length_T (5,000 [mm]), and the process advances to step S503. In step S503, the presence/absence of the next print job is determined. The print job of Document4 is scheduled next to Document3. Hence, the process advances to step S504.

In step S504, job information of Document4 is acquired. From the job information,

$$\text{ColorMode\_J} = \text{AC}$$

$$\text{Length\_J} = 200 \times 1000 \text{ [mm]} = 200000 \text{ [mm]}$$

ColorMode_N and Length_P are updated to

$$\mathrm{ColorMode\_N = ABD + AC = ABCD}$$

$$\mathrm{Length\_P = 205000 \ [mm]}$$

The process returns to step S502, and Length_P that is 205,000 [mm] is determined to be larger than Length_T (5,000 [mm]). The process advances to step S505. In step S505, ColorMode_P and ColorMode_N are compared. Since ColorMode_P is ABD, and ColorMode_N is ABCD, it is determined that these do not match, and the process advances to step S506. In step S506, ColorMode_P is updated to

$$\mathrm{ColorMode\_P = ColorMode\_N = ABCD}$$

According to updated ColorMode_P, the additional printhead 2C is moved from the retracted position to the printing position. In step S507, it is determined that the page whose printing is completed is not the final page, and the processing is ended.

(Example 5: When Printing of Final Page of Document3 Is Completed)

Here, an example in which the printheads 2 are moved from the printing position to the retracted position will be described.
In step S501, Length P is 200,000 [mm]. In step S502, Length_P is 200,000 [mm] and is determined to be larger than Length_T (5,000 [mm]), and the process advances to step S505.
In step S505, it is determined that both ColorMode_P and ColorMode_N are ABCD and match, and the process advances to step S507. In step S507, it is determined that the page is the final page, and the process advances to step S508.
In step S508, it is determined that the printhead 2A used in the print job of Document3 is to be used in the print job of subsequent Document4 as well, and the process advances to step S509. In step S509, the distance from the final page of Document3 to the first page of Document4 is calculated, and the value is Length_TJ = 0 [mm]. It is determined that Length_TJ is smaller than the value twice larger than Length _T, and the process advances to step S510.
Also, in step S508, it is determined that the printheads 2B and 2D used in Document3 are not to be used in the subsequent job Document4, and the process advances to step S511.
In step S511, ColorMode_N is updated to

$$\mathrm{ColorMode\_N = ColorMode\_N - ColorMode\_TJ = ABCD - BD = AC}$$

In step S510, ColorMode_P is updated to ColorMode_P = ColorMode_N. In step S513, according to Color-Mode_P = AC, the printheads 2B and 2D are moved from the printing position to the retracted position. Fig. 8C exemplarily shows the positions of the printheads 2 after the movement.

(Example 6: When Printing of Final Page of Document4 Is Completed)

Here, an example in which all print jobs are ended will be described.
In step S501, Length_P is 0 [mm]. In step S502, Length_P is 0 [mm] and is determined to be smaller than Length_T (5,000 [mm]), and the process advances to step S503. In step S503, it is determined that the next print job does not exist, and the process advances to step S505.
In step S505, it is determined that both ColorMode_P and ColorMode_N are AC and match, and the process advances to step S507. In step S507, it is determined that the page is the final page, and the process advances to step S508.
In step S508, since there is no print job after the print job of Document4, it is determined that the printheads 2A and 2C used in Document4 are not to be used in remaining print jobs. The process advances to step S511. In step S511, ColorMode_N is updated to

$$\mathrm{ColorMode\_N = ColorMode\_N - ColorMode\_TJ = AC - AC = 0}$$

In step S513, according to ColorMode_P = 0, the printheads 2A and 2C are moved from the printing position to the retracted position.

<Second Embodiment>

During standby, printheads 2 are located at the printing position, although these are not used in printing, and are readily affected by vapor on a print medium P. A standby time can be minimized by changing the order of execution of a plurality of print jobs. In this embodiment, a control unit 402 calculates a standby time for each of a plurality of types of orders of execution, and outputs the calculation result of the standby time to an operation unit 401. Then, a plurality of print jobs are executed in the order of execution selected by a user.

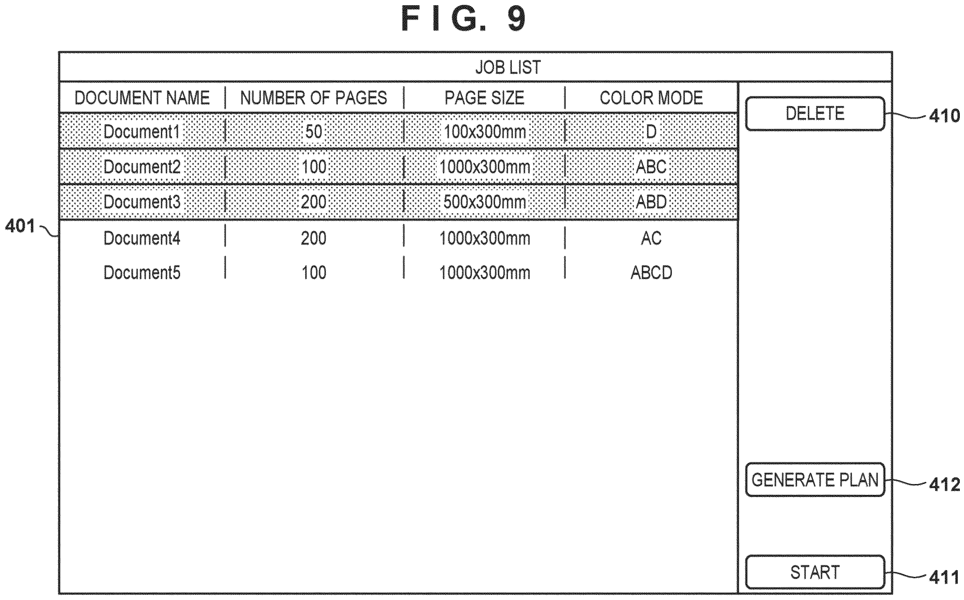

Fig. 9 is a view showing another example of a job list displayed on the operation unit 401. As compared to the example shown in Fig. 4, a plan generation button 412 is added. The example shown in Fig. 9 shows a state in which Document1, Document2, and Document3 are selected as print jobs.

The plan generation button 412 is a button that instructs presentation of a standby time when the order of execution of the plurality of selected print jobs is changed. The plan generation button 412 is enabled only when a plurality of print jobs are selected.

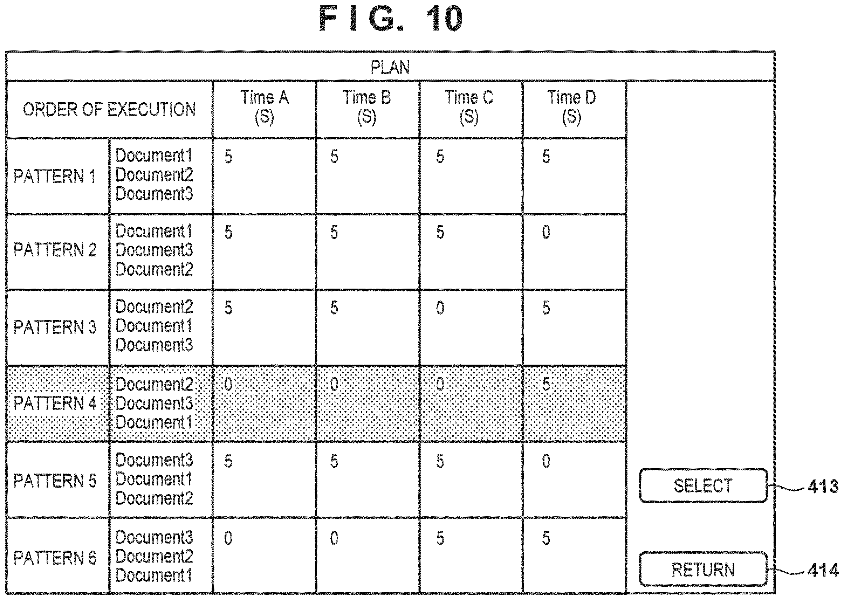

Fig. 10 shows an example of a standby time calculation result displayed on the operation unit 401 when the user operates the plan generation button 412. In the example of in Fig. 10, six types of orders of execution, including pattern 1 to pattern 6, are shown. The orders of execution of the print jobs in the patterns are as follows.

Pattern 1: Document1 $\rightarrow$ Document2 $\rightarrow$ Document3

Pattern 2: Document1 $\rightarrow$ Document3 $\rightarrow$ Document2

Pattern 3: Document2 $\rightarrow$ Document1 $\rightarrow$ Document3

Pattern 4: Document2 $\rightarrow$ Document3 $\rightarrow$ Document1

Pattern 5: Document3 $\rightarrow$ Document1 $\rightarrow$ Document2

Pattern 6: Document3 $\rightarrow$ Document2 $\rightarrow$ Document1

The total standby time (sec) of printheads 2A to 2D is shown for each pattern.

Time A is the standby time of the printhead 2A. Time B is the standby time of the printhead 2B. Time C is the standby time of the printhead 2C. Time D is the standby time of the printhead 2D. In the example shown in Fig. 10, the total standby time of the printheads 2 is shortest in pattern 4.

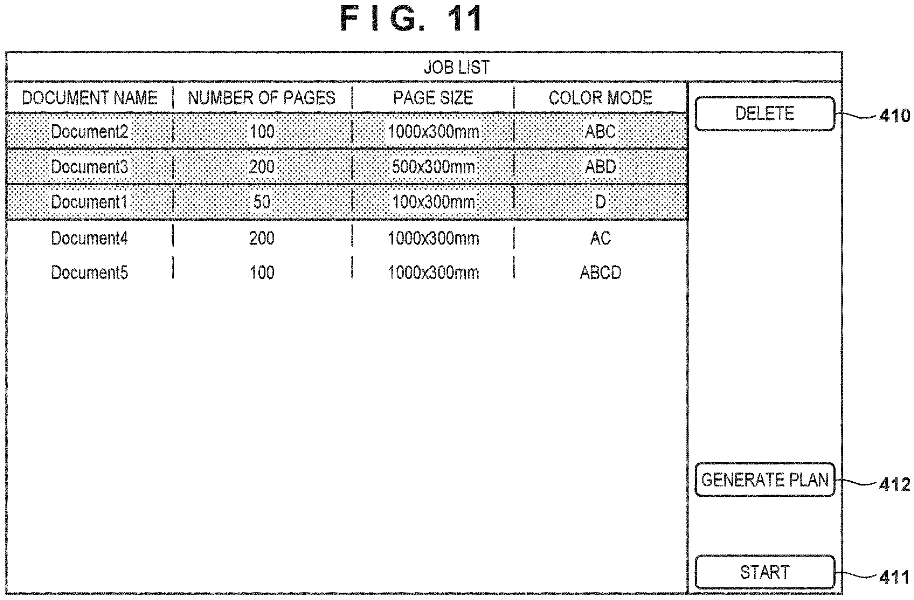

A return button 414 is a button instructed by the user to return to the display shown in Fig. 9. A select button 413 is a button that determines pattern selection. If the user selects one of the patterns and operates the select button 413, a job list in which the order of execution is changed to the pattern selected by the user is displayed, as shown in Fig. 11. The example of Fig. 11 shows a case where pattern 4 is selected. After that, if the user operates the start button 411, the print jobs of Document1 to Document3 are continuously executed in the displayed order of execution.

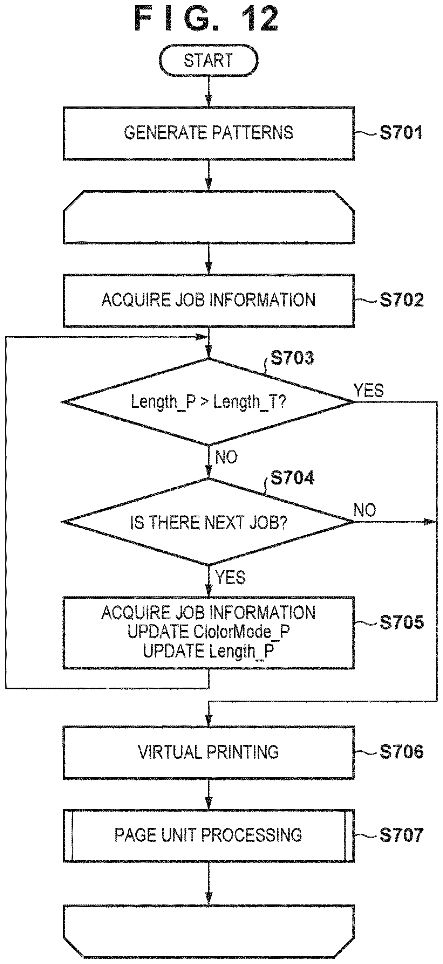

Calculation processing of the standby time will be described next. Figs. 12 to 14 are flowcharts of the processing that is executed by the control unit 402. A plurality of print jobs are virtually executed in the order of execution of each pattern, and the standby time is calculated from the result.

If the plan generation button 412 is operated on the display shown in Fig. 9, the process of step S701 is executed. Here, patterns of the order of execution of a plurality of selected print jobs are generated. Patterns 1 to 6 in Fig. 10 are examples. Next, the processes of steps S702 to S707 are executed for each pattern.

The processes of steps S702 to S705 are the same as the processes of steps S401 to S404 in Fig. 5. Hence, the procedure of each process will be explained in an application to the example shown in Fig. 9.

In step S702, job information of the first print job: Document1 of pattern 1 is acquired, and ColorMode_P and Length_P are specified. More specifically,

$$\text{ColorMode\_P} = \text{ColorMode\_N} = \text{ColorMode\_J} = D$$

$$\text{Length\_P} = \text{Length\_J} = 50 \times 100 \ [\text{mm}] = 5000 \ [\text{mm}]$$

In step S703, the calculated Length_P is compared with Length_T. Since Length_P equals Length _T, the process advances to step S704. In step S704, since it is determined that the next print job (Document2) exists, the process advances to step S705.

In step S705, job information of the next print job (Document2) is acquired, and ColorMode_P and Length_P are updated to

$$ColorMode\_P = ColorMode\_N = D + ABC = ABCD$$

$$Length\_P = 105000 \ [mm]$$

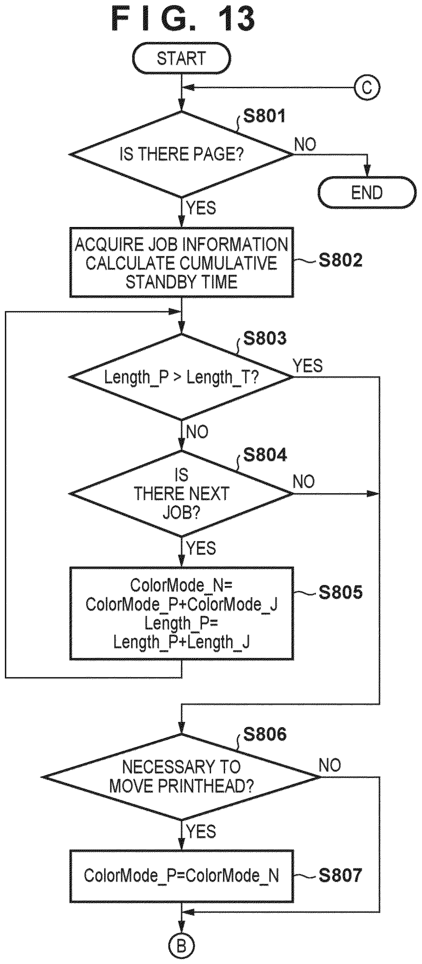

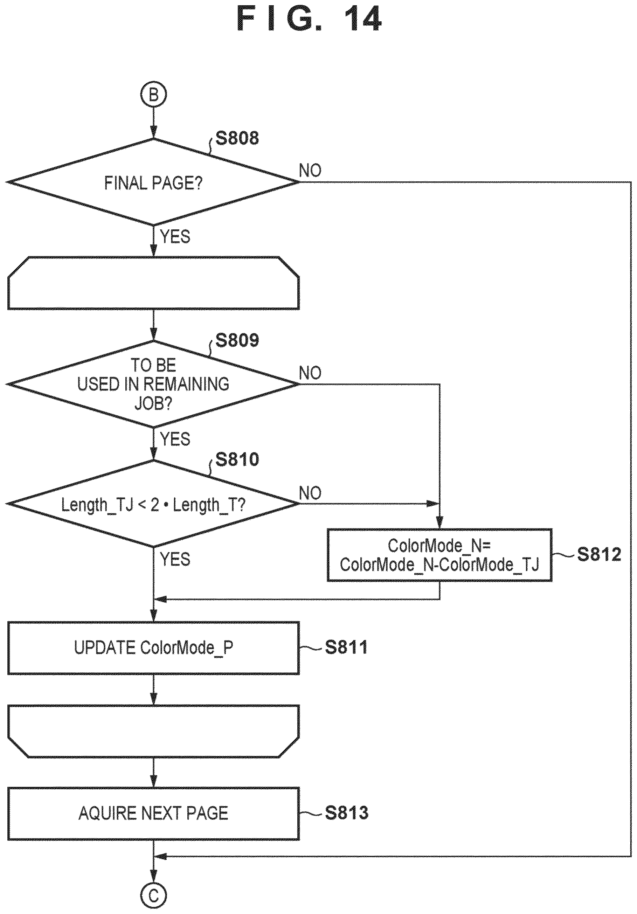

In step S706, the color mode is set to ColorMode_P, and virtual printing is started. In step S707, page unit processing shown in Figs. 13 and 14 is executed.

The processes of steps S803 to S812 are the same as the processes of steps S502 to S511 in Figs. 6 and 7. The procedure of each process will continuously be explained in an application to the example shown in Fig. 9.

In step S801, it is determined whether a page to perform virtual printing exists. If no page exists, the processing is ended. A case where virtual printing of the first page of Document1 is completed will be described. In step S802, a conveyance direction length Length_S of the page is acquired, and Length_P is updated to

$$Length\_P = Length\_P - Length\_S$$

$$Length\_P = 105000 \ [mm] - 100 \ [mm] = 104900 \ [mm]$$

ColorMode_J and ColorMode_P in the page for which the virtual printing is completed are compared, and the printhead 2 to stand by is specified. More specifically, since ColorMode_J of Document1 is D, and ColorMode_P is ABCD, standby printheads are 2A, 2B, and 2C.

The standby time of each standby printhead is obtained by

$$Time = Time + Length\_S \div Speed\_P$$

Here, Length_S is 100 [mm], and Speed_P is 60 mpm.

The obtained standby times of the standby printheads are

$$Time \ A = 0 + 100 \ [mm] \div 60 \ [mpm] = 0.1 \ [s]$$

$$Time \ B = 0 + 100 \ [mm] \div 60 \ [mpm] = 0.1 \ [s]$$

$$Time \ C = 0 + 100 \ [mm] \div 60 \ [mpm] = 0.1 \ [s]$$

$$Time \ D = 0$$

In step S803, it is determined that Length_P is larger than Length_T, and the process advances to step S806. In step S806, it is determined that both ColorMode_P and ColorMode_N are ABCD and match, and the process advances to step S808. In step S808, it is determined that the page is not the final page, and the process advances to step S813. In step S813, the information of the next page is acquired, and the process returns to step S801 to repeat similar processing.

Next, processing of the final page of Document1 will be described. In step S801, it is determined that the final page to perform virtual printing exists, and in step S802, Length P is updated to 100,000 [mm].

From the number of pages, the cumulative standby times of the printheads 2 are

$$Time \ A = 5 \ [s]$$

$$Time \ B = 5 \ [s]$$

$$\text{Time C} = 5 \text{ [s]}$$

$$\text{Time D} = 0$$

In step S803, Length P is 100,000 [mm] and is determined to be larger than Length_T (5,000 [mm]), and the process advances to step S806. In step S806, it is determined that both ColorMode_P and ColorMode_N are ABCD, and the process advances to step S808. In step S808, it is determined that the page is the final page, and the process advances to step S809.

In step S809, since it is determined that the printhead 2D used in Document1 is to be used in the subsequent job Document3, the process advances to step S810. In step S810, the distance from the final page of Document1 to the first page of Document3 is calculated as Length_TJ = 100000 [mm]. It is determined that Length _TJ is larger than the value twice larger than Length_T, and the process advances to step S812.

In step S812, ColorMode_N is updated by the following formula, and the process advances to step S811.

$$\text{ColorMode\_N} = \text{ColorMode\_N} - \text{ColorMode\_TJ} = \text{ABCD} - \text{D} = \text{ABC}$$

In step S811, ColorMode_P is updated to

$$\text{ColorMode\_P} = \text{ColorMode\_N} = \text{ABC}$$

The process advances to step S813. After that, virtual printing of Document2 is performed.

Next, a case where virtual printing of the 95th page of Document2 will be described. In step S801, it is determined that a page to perform virtual printing exists, and in step S802, Length_P is obtained as 5,000 [mm].

The cumulative standby times of the printheads 2 are

$$\text{Time A} = 5 \text{ [s]}$$

$$\text{Time B} = 5 \text{ [s]}$$

$$\text{Time C} = 5 \text{ [s]}$$

$$\text{Time D} = 0$$

In step S803, Length P is 5,000 [mm] and is determined to be equal to Length_T (5,000 [mm]), and the process advances to step S804. In step S804, it is determined that the next print job (Document3) exists, and the process advances to step S805. In step S805, job information of the next print job is acquired, and ColorMode_N and Length_P are updated to

$$\text{ColorMode\_N} = \text{ABC} + \text{ABD} = \text{ABCD}$$

$$\text{Length\_P} = 105000 \text{ [mm]}$$

In step S803, Length_P is 105,000 [mm] and is determined to be larger than Length_T (5,000 [mm]), and the process advances to step S806. In step S806, ColorMode_P and ColorMode_N are compared. In step S806, since ColorMode_P is ABC, ColorMode_N is ABCD, and it is determined that these do not match, the process advances to step S807.

In step S807, ColorMode_P is updated to

$$\text{ColorMode\_P} = \text{ColorMode\_N} = \text{ABCD}$$

In step S808, it is determined that the page is not the final page, and the process advances to step S813. In step S813, the next page information is acquired, and the process returns to step S801.

Next, processing of the final page of Document2 will be described. In step S801, it is determined that the final page to perform virtual printing exists, and in step S802, Length P is updated to 100,000 [mm]. Since ColorMode_J of Document2 is ABC, and ColorMode_P is ABCD, the standby printhead is 2D. The standby times of the 95th to 100th page of Document2 are added, thereby obtaining the cumulative standby times of the printheads 2 as

$$\text{Time A} = 5 \text{ [s]}$$

$$\text{Time B} = 5 \text{ [s]}$$

$$\text{Time C} = 5 \text{ [s]}$$

$$\text{Time D} = 5 \text{ [s]}$$

In step S803, Length P is 100,000 [mm] and is determined to be larger than Length_T (5,000 [mm]), and the process advances to step S806. In step S806, it is determined that both ColorMode_P and ColorMode_N are ABCD and match, and the process advances to step S808. In step S808, it is determined that the page is the final page, and the process advances to step S809.

In step S809, it is determined that the printheads 2A and 2B used in Document2 are to be used in the subsequent print job (Document3), and the process advances to step S810. In step S810, the distance from the final page of Document2 to the first page of Document3 is calculated as Length_TJ = 0 [mm]. It is determined that Length_TJ is smaller than the value twice larger than Length_T, and the process advances to step S811.

In step S809, it is determined that the printhead 2C used in Document2 is not to be used in the subsequent print job (Document3), and the process advances to step S812.

In step S812, ColorMode_N is updated to

$$\text{ColorMode\_N} = \text{ColorMode\_N} - \text{ColorH} = \text{ABCD} - \text{C} = \text{ABD}$$

The process advances to step S811.

In step S811, ColorMode_P is updated to

$$\text{ColorMode\_P} = \text{ColorMode\_N} = \text{ABD}$$

The process advances to step S813. In step S813, the next page information is acquired, and the process returns to step S801. Since Document3 is the final job, and ColorMode_J and ColorMode_P of Document3 have no difference, a description of subsequent processing will be omitted.

Thus, the standby times of the printheads 2 in pattern 1 are

$$\text{Time A} = 5 \text{ [s]}$$

$$\text{Time B} = 5 \text{ [s]}$$

$$\text{Time C} = 5 \text{ [s]}$$

$$\text{Time D} = 5 \text{ [s]}$$

The standby times of the printheads of pattern 1 to pattern 6 are as shown in the display example of Fig. 10.

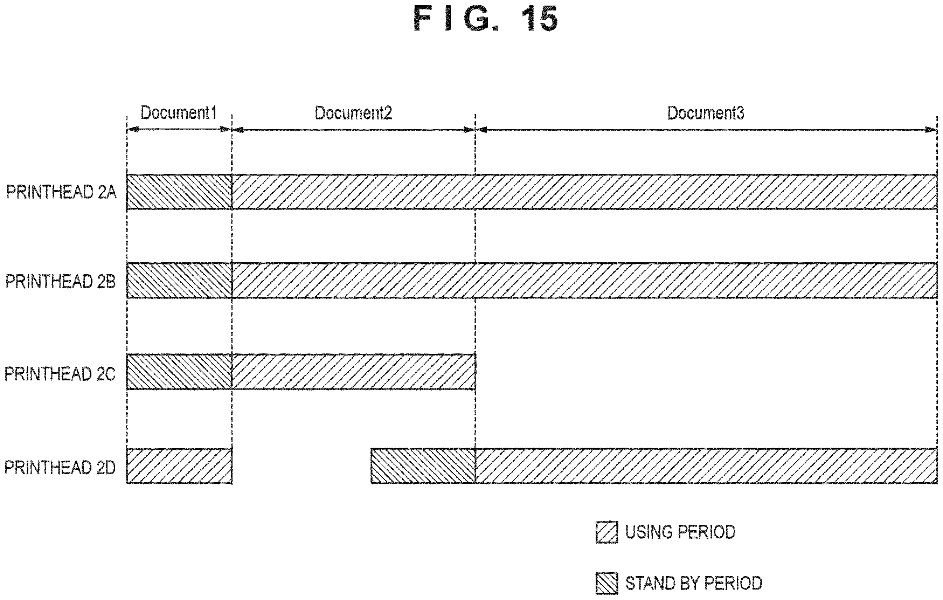

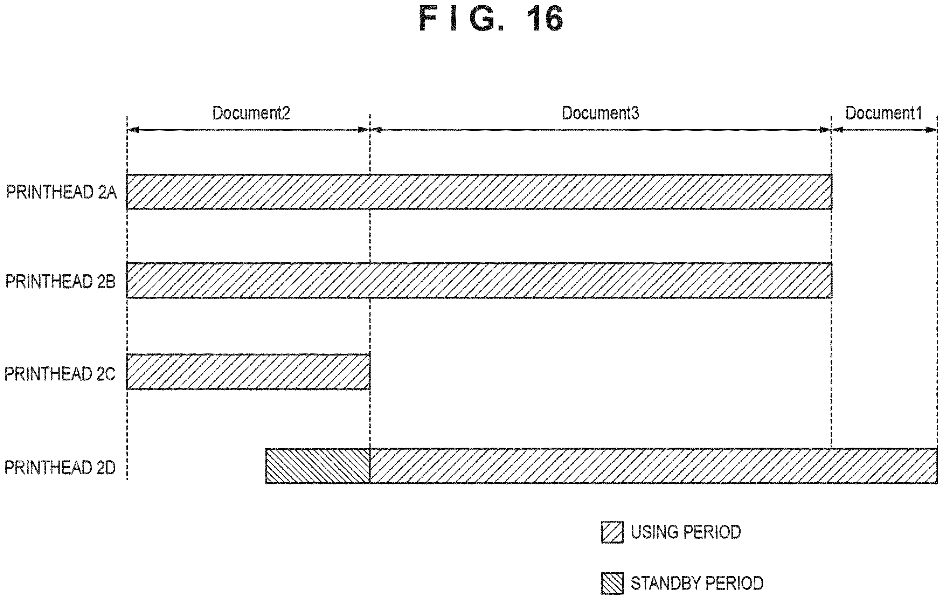

Fig. 15 is a view showing, in pattern 1, a period (standby period) in which each printhead 2 is in a standby state at the printing position, and a period (use period) in which the printhead is used. Fig. 16 is a view showing the standby period and the use period of each printhead 2 in pattern 3. It can be found that although the total printing length and the use period of each printhead 2 are the same between pattern 1 and pattern 3, the standby period changes depending on the order of execution of the print jobs.

As described above, according to this embodiment, the user can select an order of execution with which the standby time in a plurality of jobs is minimum. Note that the order of execution with which the standby time is minimum may automatically be executed without selection instruction of the user.

<Third Embodiment>

The types of inks to be discharged from printheads 2 and the arrangement of the printheads 2 are appropriately designed. For example, the printheads 2 may be divided into a plurality of groups and arranged. For example, a first printing unit formed by one or a plurality of printheads 2 including the printhead 2 that discharges white ink and a second printing unit formed by one or a plurality of printheads 2 including the printheads 2 that discharge other color inks (yellow, magenta, cyan, black, and the like) not including white ink may be arranged apart in the conveyance direction of a print medium P. In this configuration, for example, the first printing unit may be arranged on the upstream side in the conveyance direction of the print medium P with respect to the second printing unit. Also, between the first printing unit and the second printing unit, a drying unit and a cooling unit may further be arranged along the conveyance path of the print medium P.

In the configuration in which the first printing unit and the second printing unit are arranged apart in the conveyance direction of the print medium P, a print job may be a print job using only the printheads 2 included in the second printing unit. Note that control described in the first embodiment or the second embodiment may be, for example, control to the second printing unit.

In the configuration in which the first printing unit and the second printing unit are arranged apart in the conveyance direction of the print medium P, the print job may integrally manage the first printing unit and the second printing unit. Alternatively, the print job may manage each of the first printing unit and the second printing unit, or manage each printhead 2. If the print job is managed for each printhead 2, the printhead 2 of white ink on the upstream side in the conveyance direction may be managed by a second print job, and the printheads 2 of color inks in the downstream side may be managed by a first print job.

In movement control according to this embodiment as well, for example, whether to control movement of the printheads 2 is decided based on the relationship between the print time of a print job and the moving time of the printhead 2 to be moved from the retracted position to the printing position. If the print time of a first print job among a plurality of print jobs satisfies a condition capable of moving the printhead 2 to be added in the second print job, movement of the additional printhead 2 to be used for the second print job may be started before, particularly, ink discharge is completed in the first print job.

However, if the print time of the first print job does not satisfy the above-described control condition, for example, the printheads 2 used in the first print job and the second print job are moved, and then, ink discharge of the first print job is started. Thus, discharge of the second print job is started after ink discharge of the first print job is completed. Since the printheads 2 to be used for the second print job are already moved, ink is not discharged after the start of printing, time for performing only conveyance of the print medium P can be shortened, and the first print job and the second print job can continuously be printed.

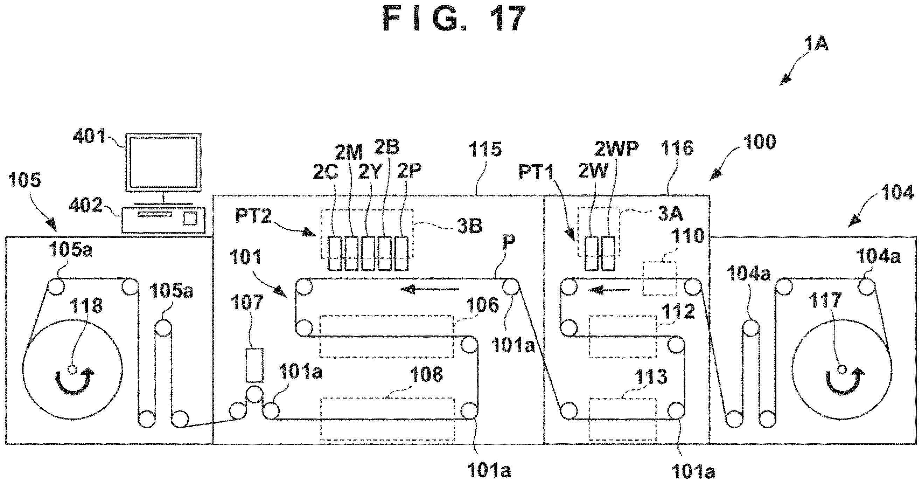

Fig. 17 is a schematic view of a printing apparatus 1A as an example of this embodiment. Components different from the printing apparatus 1 according to the first embodiment will mainly be explained below.

The printing apparatus 1A includes a feeding device 104, an image forming device 100, and a discharge device 105. The image forming device 100 includes an additional printing device 115 and a preprinting device 116. A conveying device 101 includes a plurality of conveyance rollers 101a, and conveys the print medium P, which is fed from the feeding device 104, at a predetermined speed such that it passes through the preprinting device 116 and the additional printing device 115 in this order.

The preprinting device 116 performs spot color printing as preprinting. In spot color printing, for example, a base with a predetermined pattern is printed. The additional printing device 115 performs printing of basic colors as additional printing. In printing of basic colors, for example, a predetermined pattern or the like is printed. That is, it can be said that the printing apparatus 1A is a digital printing apparatus that performs preprinting and additional printing.

The preprinting device 116 includes a skew correction unit 110, a printing unit PT1, a drying unit 112, and a cooling unit 113, which are arranged sequentially from the upstream side in the conveyance direction of the print medium P. The skew correction unit 110 corrects skew of the print medium P. The printing unit PT1 includes a printhead 2WP, a printhead 2W, and a moving unit 3A. In this embodiment, the printhead 2W discharges white ink, and the printhead 2WP discharges primer ink for fixing. The printhead 2WP is located on the upstream side in the conveyance direction of the print medium P with respect to the printhead 2W.

The moving unit 3A is a mechanism that moves the printhead 2WP and the printhead 2W individually between a printing position and a retracted position. The same mechanism as the moving mechanism 3 described with reference to Figs. 2A and 2B can be employed.

The drying unit 112 heats the print medium P, thereby promoting drying of ink discharged to the print medium P. The cooling unit 113 cools the print medium P heated by the drying unit 112.

The additional printing device 115 has the same configuration as the image forming device 100 according to the first embodiment. The additional printing device 115 includes a printing unit PT2, a drying unit 106, a cooling unit 108, and an inspection unit 107, which are arranged sequentially from the upstream side in the conveyance direction of the print medium P.

The printing unit PT2 includes a printhead 2P, a printhead 2B, a printhead 2Y, a printhead 2M, and a printhead 2C, which are arranged sequentially from the upstream side in the conveyance direction of the print medium P. In this embodiment, the printhead 2P discharges primer ink for fixing. The printhead 2B discharges black ink. The printhead 2Y discharges yellow ink. The printhead 2M discharges magenta ink. The printhead 2C discharges cyan ink. Also, the printing unit PT2 includes a moving unit 3B. The moving unit 3B is a mechanism that moves the printhead 2P, the printhead 2B, the printhead 2Y, the printhead 2M, and the printhead 2C individually between a printing position and a retracted position, and the same mechanism as the moving mechanism 3 described with reference to Figs. 2A and 2B can be employed.

The drying unit 106 heats the print medium P, thereby promoting drying of ink discharged to the print medium P. The cooling unit 108 cools the print medium P heated by the drying unit 106. The inspection unit 107 is a device that reads and inspects the image printed on the print medium P and includes, for example, a scanner device. Examples of inspection contents are inspection of color misalignment of the printed image, inspection of discharge failures of the printhead 2, and inspection of the tint of the printed image. These inspections may be performed by printing a test pattern on the print medium P by the printhead 2 and reading the test pattern by the inspection unit 107.

Each of the printheads 2WP, 2W, 2P, 2B, 2Y, 2M, and 2C is a full-line head and can discharge ink supplied from an ink tank (not shown) to the whole region of the print medium P in the widthwise direction. One printhead 2 discharges one type of ink.

Control described in the first embodiment or the second embodiment may be, for example, control to the printing unit PT2.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A printing apparatus (1) comprising:

   moving means (3) arranged to individually move each of printheads (2) between a printing position at which a liquid is discharged to a print medium and a retracted position apart from the print medium as compared to the printing position; and
   control means (402) configured to control the moving means (3) so as to, before execution of a top print job among a plurality of print jobs, move a printhead (2) to be used in the top print job and a printhead (2) to be used in a print job after the top print job from the retracted position to the printing position as an initial movement control,
   wherein the control means (402) controls the moving means (3) so as to, during execution of a first print job among the plurality of print jobs, move a printhead (2) to be used in a second print job after the first print job from the retracted position to the printing position as a first movement control.

2. The apparats according to claim 1, wherein

the printhead moved by the first movement control is a printhead configured to discharges a liquid of a type not used during execution of the first print job.

3.  The apparats according to claim 1, wherein
    movement of the printhead in the first movement control is started until discharge of the liquid to the print medium in the first print job is ended.

4.  The apparats according to claim 1, further comprising:

    first printing means (PT1) including a printhead configured to discharge a white liquid; and
    second printing means (PT2) arranged on a downstream side in a conveyance direction of the print medium with respect to the first printing means and including printheads which do not include a printhead configured to discharge a white liquid,
    wherein the first movement control is control with respect to a printhead in the second printing means and a print job.

5.  The apparats according to claim 1, wherein
    the control means is capable of executing second movement control to start movement of a printhead not used in a third print job among the plurality of print jobs from the printing position to the retracted position if a print job before the third print job is ended.

6.  The apparats according to claim 5, wherein
    if the printhead not used in the third print job is used in a fourth print job after the third print job, the control means is capable of executing control to cause the printhead to stand by at the printing position in the third print job.

7.  The apparats according to claim 1, further comprising conveying means (101) arranged to convey the print medium,

    wherein the control means performs
    comparing a conveyance amount of the print medium conveyed during movement of a printhead with a conveyance amount of the print medium conveyed by executing a remaining printing in the first print job, and executing the first movement control based on a result of the comparing.

8.  The apparats according to claim 1, further comprising conveying means (101) arranged to convey the print medium,

    wherein the control means performs
    comparing a conveyance amount of the print medium conveyed during movement of a printhead with a conveyance amount of the print medium conveyed by executing the top print job, and
    executing the initial movement control based on a result of the comparing.

9.  The apparats according to claim 5, further comprising conveying means (101) arranged to convey the print medium,

    wherein if the printhead not used in the third print job is used in a fourth print job after the third print job, the control means performs
    comparing a conveyance amount of the print medium conveyed during reciprocal movement of the printhead between the printing position and the retracted position with a conveyance amount of the print medium conveyed until execution of the fourth print job, and
    executing the second movement control based on a result of the comparing.

10. The apparats according to claim 7, wherein

    the plurality of print jobs are continuously executed, and
    the conveying means (101) continuously conveys the print medium during execution of the plurality of print jobs.

11. The apparats according to claim 4, wherein

    the control means (402) performs
    calculating, for each of a plurality of types of orders of execution of the plurality of print jobs, a standby time in which each printhead is located at the printing position in a print job in which the printhead is not used, and

outputting a calculation result of the standby time.

12. The apparats according to claim 11, wherein
the control means (402) executes the plurality of print jobs in an order of execution selected by a user among the plurality of types of orders of execution.

13. A control method of a printing apparatus (1) including moving means (3) arranged to individually move each of printheads (2) between a printing position at which a liquid is discharged to a print medium and a retracted position apart from the print medium as compared to the printing position, the method comprising:

controlling the moving means (3) so as to, before execution of a top print job among a plurality of print jobs, move a printhead (2) used in the top print job and a printhead (2) to be used in a print job after the top print job from the retracted position to the printing position; and
controlling the moving means (3) so as to, during execution of a first print job among the plurality of print jobs, move a printhead (2) to be used in a second print job after the first print job from the retracted position to the printing position.

14. A non-transitory computer-readable storage medium storing a program configured to, for controling a printing apparatus (1) including moving means (3) arranged to individually move each of printheads (2) between a printing position at which a liquid is discharged to a print medium and a retracted position apart from the print medium as compared to the printing position, cause a computer to execute:

controlling the moving (3) means so as to, before execution of a top print job among a plurality of print jobs, move a printhead (2) used in the top print job and a printhead (2) to be used in a print job after the top print job from the retracted position to the printing position; and
controlling the moving means (3) so as to, during execution of a first print job among the plurality of print jobs, move a printhead (2) to be used in a second print job after the first print job from the retracted position to the printing position.

15. A computer program configured to, for controling a printing apparatus including moving means arranged to individually move each of printheads between a printing position at which a liquid is discharged to a print medium and a retracted position apart from the print medium as compared to the printing position, cause a computer to execute:

controlling the moving means so as to, before execution of a top print job among a plurality of print jobs, move a printhead used in the top print job and a printhead to be used in a print job after the top print job from the retracted position to the printing position; and
controlling the moving means so as to, during execution of a first print job among the plurality of print jobs, move a printhead to be used in a second print job after the first print job from the retracted position to the printing position.

FIG. 1

F I G. 2B

F I G. 2A

# FIG. 3

# FIG. 4

| JOB LIST | | | | |
|---|---|---|---|---|
| DOCUMENT NAME | NUMBER OF PAGES | PAGE SIZE | COLOR MODE | DELETE |
| Document1 | 50 | 100x300mm | A | |
| Document2 | 100 | 1000x300mm | ABC | |
| Document3 | 200 | 500x300mm | ABD | |
| Document4 | 200 | 1000x300mm | AC | |
| Document5 | 100 | 1000x300mm | ABCD | START |

401

410

411

EP 4 516 515 A1

# F I G. 5

```
                    ┌─────────┐
                    │  START  │
                    └────┬────┘
                         │
                         ▼
            ┌───────────────────────┐
            │   ACQUIRE JOB         │─── S401
            │   INFORMATION         │
            └───────────┬───────────┘
                        │
         ┌──────────────▼──────────────┐
         │              S402           │      YES
         ◇   Length_P>Length_T?        ◇──────────┐
         └──────────────┬──────────────┘          │
                        │ NO                       │
         ┌──────────────▼──────────────┐          │
         │              S403           │   NO     │
         ◇   IS THERE NEXT JOB?        ◇────────┐ │
         └──────────────┬──────────────┘        │ │
                        │ YES                    │ │
            ┌───────────▼───────────┐            │ │
            │ ACQUIRE JOB INFORMATION│─── S404    │ │
            │ UPDATE CiolorMode_P    │            │ │
            │ UPDATE Length_P        │            │ │
            └───────────┬───────────┘            │ │
                        │                         │ │
                        ▼                         │ │
            ┌───────────────────────┐            │ │
            │   MOVE PRINTHEAD IN    │─── S405    │ │
            │   ACCORDANCE WITH      │            │ │
            │   ColorMode_P          │            │ │
            └───────────┬───────────┘            │ │
                        │                         │ │
                    ┌───▼─────┐                   │ │
                    │   END   │                   │ │
                    └─────────┘                   │ │
```

# F I G. 6

START

↓

END PRINTING OF 1 PAGE
Length_P =Length_P-Length_S — **S501**

↓

**S502**
Length_P > Length_T? — YES →

NO ↓

**S503**
IS THERE NEXT JOB? — NO →

YES ↓

ColorMode_N=
ColorMode_P+ColorMode_J
Length_P=
Length_P+Length_J — **S504**

↓

**S505**
NECESSARY TO MOVE PRINTHEAD? — NO →

YES ↓

ColorMode_P=ColorMode_N
MOVE PRINTHEAD — **S506**

↓

(A)

# FIG. 7

(A)

S507
FINAL PAGE? — NO

YES

S508
TO BE USED IN REMAINING JOB? — NO

YES

S509
Length_TJ < 2 • Length_T? — NO

YES

ColorMode_N= ColorMode_N-ColorMode_TJ — S511

UPDATE ColorMode_P — S510

MOVE PRINTHEAD — S513

END

# F I G. 8A

# F I G. 8B

# F I G. 8C

# F I G. 9

| JOB LIST | | | | |
|---|---|---|---|---|
| DOCUMENT NAME | NUMBER OF PAGES | PAGE SIZE | COLOR MODE | DELETE |
| Document1 | 50 | 100x300mm | D | |
| Document2 | 100 | 1000x300mm | ABC | |
| Document3 | 200 | 500x300mm | ABD | |
| Document4 | 200 | 1000x300mm | AC | |
| Document5 | 100 | 1000x300mm | ABCD | GENERATE PLAN |
| | | | | START |

401

410

412

411

EP 4 516 515 A1

## F I G. 10

| PLAN | | | | | | |
|---|---|---|---|---|---|---|
| ORDER OF EXECUTION | | Time A (S) | Time B (S) | Time C (S) | Time D (S) | |
| PATTERN 1 | Document1 Document2 Document3 | 5 | 5 | 5 | 5 | |
| PATTERN 2 | Document1 Document3 Document2 | 5 | 5 | 5 | 0 | |
| PATTERN 3 | Document2 Document1 Document3 | 5 | 5 | 0 | 5 | |
| PATTERN 4 | Document2 Document3 Document1 | 0 | 0 | 0 | 5 | |
| PATTERN 5 | Document3 Document1 Document2 | 5 | 5 | 5 | 0 | SELECT — 413 |
| PATTERN 6 | Document3 Document2 Document1 | 0 | 0 | 5 | 5 | RETURN — 414 |

EP 4 516 515 A1

# F I G. 11

| JOB LIST | | | |
|---|---|---|---|
| DOCUMENT NAME | NUMBER OF PAGES | PAGE SIZE | COLOR MODE |
| Document2 | 100 | 1000x300mm | ABC |
| Document3 | 200 | 500x300mm | ABD |
| Document1 | 50 | 100x300mm | D |
| Document4 | 200 | 1000x300mm | AC |
| Document5 | 100 | 1000x300mm | ABCD |

DELETE — 410

GENERATE PLAN — 412

START — 411

# F I G. 12

START

GENERATE PATTERNS — S701

ACQUIRE JOB INFORMATION — S702

S703
Length_P > Length_T? — YES

NO

S704
IS THERE NEXT JOB? — NO

YES

ACQUIRE JOB INFORMATION
UPDATE CIolorMode_P
UPDATE Length_P — S705

VIRTUAL PRINTING — S706

PAGE UNIT PROCESSING — S707

# F I G. 13

```
            START

                          ←──────────── Ⓒ

                       S801
         IS THERE PAGE?      NO
                                ──→    END
            YES

      ACQUIRE JOB INFORMATION
        CALCULATE CUMULATIVE     S802
           STANDBY TIME

                       S803
        Length_P > Length_T?      YES
            NO

                    S804
              IS
          THERE NEXT         NO
             JOB?                ──→
            YES

          ColorMode_N=
      ColorMode_P+ColorMode_J    S805
         Length_P=
      Length_P+Length_J

                       S806
        NECESSARY TO            NO
        MOVE PRINTHEAD?
            YES

      ColorMode_P=ColorMode_N    S807

                    Ⓑ
```

# F I G. 14

**S808** — FINAL PAGE?

NO → (to C path)

YES ↓

**S809** — TO BE USED IN REMAINING JOB?

NO ↓

**S810** — $Length\_TJ < 2 \cdot Length\_T?$

NO → **S812** $ColorMode\_N = ColorMode\_N - ColorMode\_TJ$

YES ↓

**S811** — UPDATE ColorMode_P

**S813** — AQUIRE NEXT PAGE

C

# F I G. 15

Document1 | Document2 | Document3

PRINTHEAD 2A

PRINTHEAD 2B

PRINTHEAD 2C

PRINTHEAD 2D

USING PERIOD

STAND BY PERIOD

EP 4 516 515 A1

# FIG. 16

Document2 | Document3 | Document1

PRINTHEAD 2A

PRINTHEAD 2B

PRINTHEAD 2C

PRINTHEAD 2D

▨ USING PERIOD

▧ STANDBY PERIOD

EP 4 516 515 A1

# FIG. 17

EP 4 516 515 A1

Europäisches
Patentamt

European
Patent Office

Office européen
des brevets

## EUROPEAN SEARCH REPORT

Application Number

EP 24 19 4895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 168804 A (KONICA MINOLTA INC) 15 October 2020 (2020-10-15) * figures 1, 3-5, 7, 13 * * paragraph [0026] - paragraph [0031] * * paragraph [0035] - paragraph [0038] * * paragraph [0047] - paragraph [0050] * * paragraph [0080] * | 1-15 | INV. B41J2/21 B41J25/304 G06F3/12 |
| X | US 2012/075373 A1 (ITO KOJI [JP]) 29 March 2012 (2012-03-29) * figures 1-3, 6 * * paragraph [0043] - paragraph [0046] * * paragraph [0051] * * paragraph [0061] * | 1-3,5,6, 13-15 | |
| A | JP 2021 066129 A (KONICA MINOLTA INC) 30 April 2021 (2021-04-30) * figures 2-4, 6-7 * * paragraph [0038] * * paragraph [0043] * * paragraph [0051] * * paragraph [0053] * * paragraph [0076] * | 4 | |
| A | JP 2016 144937 A (XEROX CORP) 12 August 2016 (2016-08-12) * figures 1-4 * * paragraph [0022] - paragraph [0028] * | 1-15 | TECHNICAL FIELDS SEARCHED (IPC) B41J G06F |

The present search report has been drawn up for all claims

| Place of search | Date of completion of the search | Examiner |
|---|---|---|
| The Hague | 13 December 2024 | João, César |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4895

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | | Publication date | Patent family member(s) | | Publication date |
|---|---|---|---|---|---|
| JP 2020168804 | A | 15-10-2020 | JP | 7283184 B2 | 30-05-2023 |
| | | | JP | 2020168804 A | 15-10-2020 |
| US 2012075373 | A1 | 29-03-2012 | JP | 5845768 B2 | 20-01-2016 |
| | | | JP | 2012091499 A | 17-05-2012 |
| | | | US | 2012075373 A1 | 29-03-2012 |
| JP 2021066129 | A | 30-04-2021 | JP | 7415435 B2 | 17-01-2024 |
| | | | JP | 2021066129 A | 30-04-2021 |
| JP 2016144937 | A | 12-08-2016 | JP | 6483037 B2 | 13-03-2019 |
| | | | JP | 2016144937 A | 12-08-2016 |
| | | | US | 9248645 B1 | 02-02-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011201132 A